(19) Europäisches Patentamt / European Patent Office / Office européen des brevets

(11) **EP 4 443 262 B1**

(12) **EUROPEAN PATENT SPECIFICATION**

(45) Date of publication and mention
of the grant of the patent:
**29.04.2026 Bulletin 2026/18**

(21) Application number: **24166765.8**

(22) Date of filing: **27.03.2024**

(51) International Patent Classification (IPC):
*G05D 1/244* (2024.01)      *B66F 9/00* (2006.01)
*G05D 1/246* (2024.01)      *G05D 105/28* (2024.01)
*G05D 107/70* (2024.01)      *G05D 109/10* (2024.01)
*G05D 111/10* (2024.01)      *G06T 7/00* (2017.01)
*G06V 20/00* (2022.01)      *G05D 111/63* (2024.01)
*B66F 9/075* (2006.01)      *G06V 10/24* (2022.01)
*G06V 20/56* (2022.01)

(52) Cooperative Patent Classification (CPC):
**G05D 1/2446; B66F 9/0755; G05D 1/246;
G06V 10/245; G06V 20/56;** G05D 2105/28;
G05D 2107/70; G05D 2109/10; G05D 2111/10;
G05D 2111/64

(54) **MOBILE UNIT CONTROL SYSTEM**

STEUERUNGSSYSTEM FÜR MOBILE EINHEIT

SYSTÈME DE COMMANDE D'UNITÉ MOBILE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.04.2023 JP 2023061957**

(43) Date of publication of application:
**09.10.2024 Bulletin 2024/41**

(73) Proprietor: **KABUSHIKI KAISHA TOYOTA
JIDOSHOKKI
Kariya-shi, Aichi-ken (JP)**

(72) Inventor: **ISHIZAKI, Masataka
Kariya-shi, Aichi-ken (JP)**

(74) Representative: **Hoffmann Eitle
Patent- und Rechtsanwälte PartmbB
Arabellastraße 30
81925 München (DE)**

(56) References cited:
JP-A- 2022 012 369      US-A1- 2014 267 703
US-A1- 2018 088 586

**Description**

BACKGROUND

1. Field

The present disclosure relates to a mobile unit control system.

2. Description of Related Art

A portable device disclosed in Japanese Laid-Open Patent Publication No. 2020-80147 includes an image capturing device. The image capturing device captures images of a marker. The portable device estimates its self-location from image data containing the marker. The portable device is carried by an operator.

In some cases, the positional relationship between a mobile unit and a marker is derived by an image capturing device and a control unit provided in the mobile unit. When an imaging device is installed on a mobile unit, a marker in image data may be distorted due to at least one of the following causes: movement of the mobile unit, vibration applied to the image capturing device from the mobile unit, and constraints on the installation position of the image capturing device. When the marker is distorted, the control unit may not be able to accurately recognize the positional relationship between the mobile unit and the marker. When the positional relationship between the mobile unit and the marker cannot be accurately recognized, the control unit may not be able to appropriately control the mobile unit. For example, when estimating the self-location of the mobile unit using a marker, the control unit acquires image data by capturing images of the marker with the image capturing device. The marker is associated with the absolute position of the marker. The control unit acquires the absolute position of the marker by reading the marker. The control unit calculates a relative position of the mobile unit with respect to the marker from the image data. The control unit estimates the self-location of the mobile unit from the absolute position of the marker and the relative position of the mobile unit with respect to the marker. When the relative position of the mobile unit with respect to the marker cannot be recognized with high accuracy, the estimation accuracy of the self-location decreases.

Further, US 2014/0267703 A1 discloses an apparatus of mapping landmark position and orientation into a coordinate space. Landmarks are arranged on roof trusses, floor, wall, or other structures. The apparatus images the landmarks by cameras mounted on a cart while moving the cart to determine the position and orientation of the landmarks and map the position and orientation of the landmarks into the coordinate space. An absolute position of the cart, which is a movable unit, is determined based on measurement of a distance to a reference point in a building using a laser, and the coordinate space used or mapping is defined with reference to the absolute position of the cart. During the mapping process, the cart is moved along the cart X-axis while keeping laser beam aligned to the "first straight reference line". That is, this document D1 teaches recognizing the position of the mobile unit in the movement environment using laser beam.

Yet further US 2018/0088586 A1 and JP 2022-012369 A have been found to represent technological background for the present invention.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The objectives are met by the subject-matter of claim 1. Further preferred embodiments of the present invention are defined in claims 2 and 3.

In one general aspect, a mobile unit control system includes an image capturing device and a control unit. The image capturing device is attached to a mobile unit and is configured to capture images of a marker disposed in a movement environment of the mobile unit. The image capturing device is a stereo camera unit. The control unit is configured to acquire image data from the image capturing device, detect the marker from the image data, estimate a position of the mobile unit in the movement environment from a positional relationship between the mobile unit and the marker based on the marker, and execute a control based on the estimated position.

Other features and aspects will be apparent from the following detailed description, the drawings, and the claims.

BRIEF DESCRIPTION OF THE DRAWINGS

Fig. 1 is a schematic diagram showing a movement environment.

Fig. 2 is a perspective view of a mobile unit moving in the movement environment shown in Fig. 1.
Fig. 3 is a schematic diagram of the mobile unit shown in Fig. 2.
Fig. 4 is a diagram illustrating an example of restricted area information.
Fig. 5 is a flowchart showing a control executed by a mobile unit control system of Fig. 3.
Fig. 6 is a diagram illustrating an example of marker position information.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, except for operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

A mobile unit control system according to one embodiment will now be described.

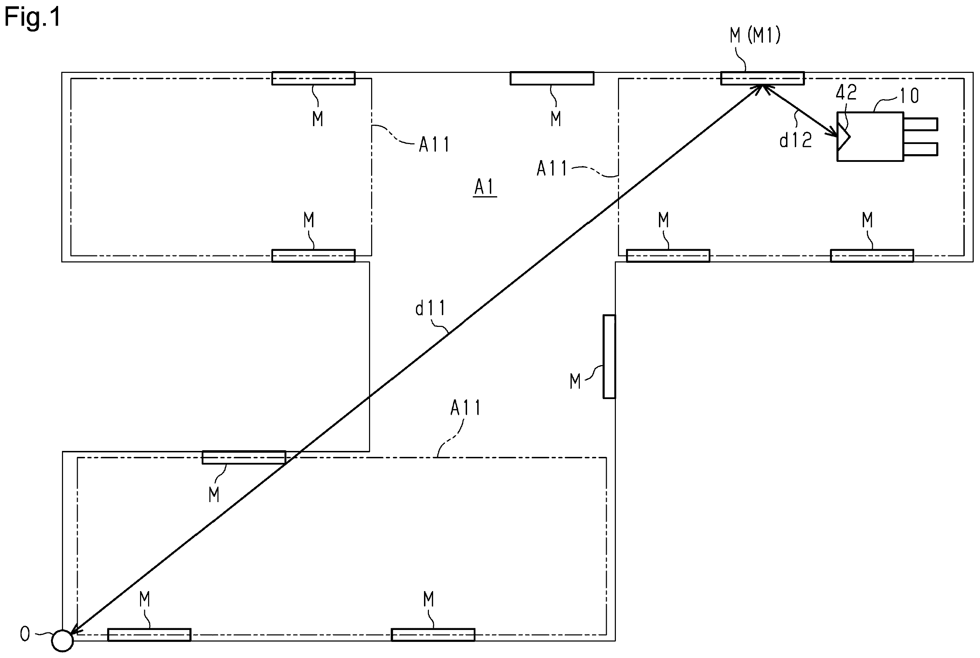

As shown in Fig. 1, a mobile unit 10 moves in a predetermined movement environment A1. The movement environment A1 is, for example, a factory, a distribution warehouse, a maritime port, a commercial facility, or a public facility. The movement environmentA1 is provided with at least one marker M. In the present embodiment, multiple markers M are provided. The markers M are each provided on, for example, a structure that exists in the movement environment A1. The positions of such structures are unlikely to be moved. The markers M are provided on, for example, a wall, a floor, or a column. Each marker M is associated with unique information. In the present embodiment, a unique number is associated with each marker M as unique information. The markers M are, for example, augmented reality (AR) markers, QR codes®, or barcodes.

Mobile Unit

The mobile unit 10 is, for example, a vehicle or a flying object. Vehicles include industrial vehicles and passenger cars. Industrial vehicles include, for example, forklifts and towing tractors. As an example, a case in which the mobile unit 10 is a forklift will be described.

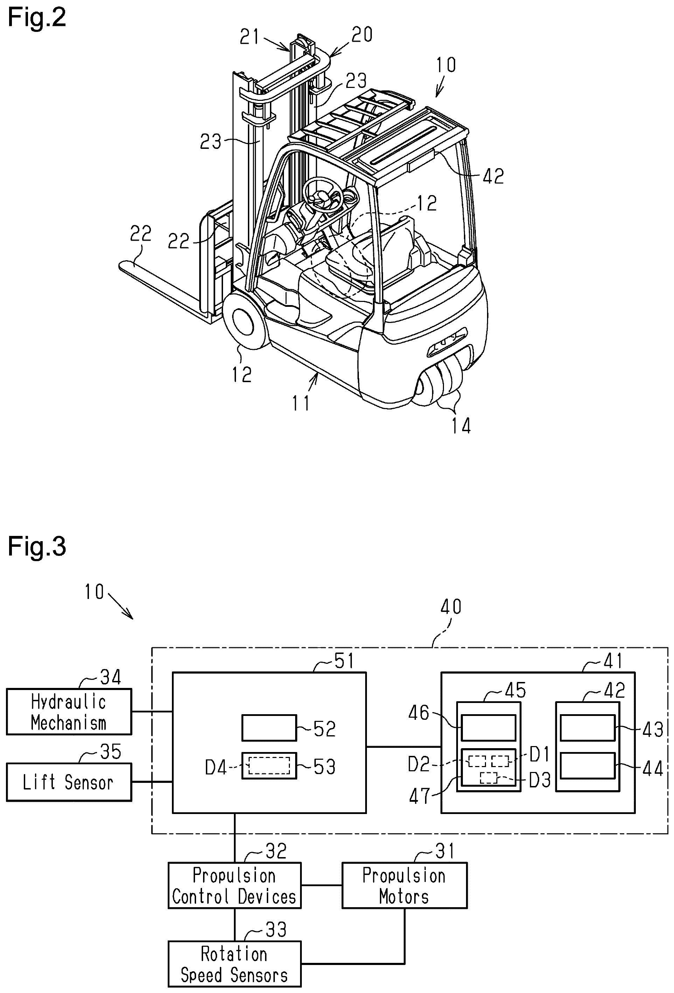

As shown in Fig. 2, the mobile unit 10 includes a vehicle body 11, two driven wheels 12, two steered wheels 14, and a material handling device 20.

The material handling device 20 includes a mast 21. The mast 21 is provided in a front of the vehicle body 11. The material handling device 20 includes two forks 22. The forks 22 are lifted and lowered along the mast 21. The material handling device 20 includes lift cylinders 23. The lift cylinders 23 are hydraulic cylinders. The lift cylinders 23 are extended or retracted to lift or lower the forks 22.

As shown in Fig. 3, the mobile unit 10 includes propulsion motors 31. The mobile unit 10 moves by rotation of the driven wheels 12, which are driven by the propulsion motors 31. The propulsion motors 31 are respectively provided for the driven wheels 12.

The mobile unit 10 includes propulsion control devices 32. The propulsion control devices 32 are motor drivers that control the rotation speeds of the respective propulsion motors 31. The propulsion control devices 32 are respectively provided for the propulsion motors 31.

The mobile unit 10 includes rotation speed sensors 33. The rotation speed sensors 33 are respectively provided for the propulsion motors 31. The rotation speed sensors 33 each detect a rotation speed of the corresponding propulsion motor 31. The rotation speed sensors 33 are, for example, rotary encoders. Each rotation speed sensor 33 outputs an electric signal corresponding to the rotation speed of the associated propulsion motor 31 to the associated propulsion control device 32. Each propulsion control device 32 acquires the rotation speed of the corresponding propulsion motor 31 from the electric signal of the rotation speed sensor 33.

The mobile unit 10 includes a hydraulic mechanism 34. The hydraulic mechanism 34 controls supply and discharge of hydraulic oil to and from hydraulic devices. The hydraulic devices include the lift cylinders 23. The hydraulic mechanism 34 includes a pump that discharges hydraulic oil and a control valve that controls supply and discharge of hydraulic oil to and from hydraulic devices.

The mobile unit 10 includes a lift sensor 35. The lift sensor 35 detects the lift height of the forks 22. The lift height of the fork 22 is the height from the road surface to the forks 22.

The mobile unit 10 includes a mobile unit control system 40. The mobile unit control system 40 controls the mobile unit 10.

Mobile Unit Control System

The mobile unit control system 40 includes a camera unit 41.

The camera unit 41 includes an image capturing device 42. The image capturing device 42 is a stereo camera unit. The image capturing device 42 includes a first camera 43 and a second camera 44. Each camera 43, 44 uses, for example, an image sensor. The image sensor is, for example, a CCD image sensor or a CMOS image sensor. The first camera 43 and the second camera 44 are disposed apart from each other. The first camera 43 and the second camera 44 are disposed such that their optical axes are parallel to each other. The image capturing device 42 captures images with each of the first camera 43 and the second camera 44.

The image capturing device 42 is attached to the mobile unit 10. The image capturing device 42 is disposed so as to capture images of the surroundings of the mobile unit 10. Specifically, the image capturing device 42 is disposed so as to capture images of the markers M disposed in the movement environment A1. The image capturing device 42 of the present embodiment is disposed so as to capture images the area behind the mobile unit 10.

The camera unit 41 includes a first control device 45. The first control device 45 includes a processor 46 and a storage unit 47. The processor 46 is, for example, a central processing unit (CPU), a graphics processing unit (GPU), or a digital signal processor (DSP). The storage unit 47 includes a random-access memory (RAM) and a read-only memory (ROM). The storage unit 47 stores programs for operating the mobile unit 10. The storage unit 47 stores program codes or commands configured to cause the processor 46 to execute processes. The storage unit 47, which is a computerreadable medium, includes any type of medium that is accessible by a general-purpose computer or a dedicated computer. The first control device 45 may include a hardware circuit such as an application specific integrated circuit (ASIC) and a field programmable gate array (FPGA). The first control device 45, which is processing circuitry, may include one or more processors that operate according to a computer program, one or more hardware circuits such as an ASIC and an FPGA, or a combination thereof.

The storage unit 47 stores map data D1. If the mobile unit control system 40 includes an auxiliary storage device, the map data D1 may be stored in the auxiliary storage device. The auxiliary storage device is, for example, a hard disk drive or a solid state drive.

The map data D1 represents the movement environment A1 with coordinates in a map coordinate system. Specifically, the map data D1 represents structures included in the movement environmentA1 with coordinates in the map coordinate system.

As shown in Fig. 1, the map coordinate system is an absolute coordinate system in which the position of the origin O is fixed. The map coordinate system may represent at least positions in the horizontal direction. The map coordinate system may be a two-dimensional coordinate system that represents coordinates in the horizontal direction with an X-axis and a Y-axis orthogonal to each other. The map coordinate system may be a three-dimensional coordinate system that represents coordinates in the horizontal direction with an X-axis and a Y-axis orthogonal to each other, and represents coordinates in the vertical direction with a Z-axis, which is orthogonal to the X-axis and the Y-axis. The map data D1 is created by using, for example, simultaneous localization and mapping (SLAM). The map data D1 is, for example, a point cloud map or an occupancy grid map. Hereinafter, coordinates in the map coordinate system are referred to as map coordinates in some cases. The map coordinates represent absolute positions in the movement environment A1.

As shown in Fig. 3, the storage unit 47 stores marker information D2. The marker information D2 represents the markers M with map coordinates. For example, the marker information D2 may be data that represents the positions of the unique numbers associated with the markers M with map coordinates. Thus, the markers M define the absolute positions of the markers M in the movement environment A1. The first control device 45 can recognize the map coordinates of the markers M by reading the markers M.

The mobile unit control system 40 includes a second control device 51, which is processing circuitry. The second control device 51 has, for example, a hardware configuration similar to that of the first control device 45. The second control device 51 includes, for example, a processor 52 and a storage unit 53. The first control device 45 and the second control device 51 are examples of control units. The first control device 45 and the second control device 51 are configured to acquire information from each other.

The second control device 51 performs, for example, a control related to operation of the mobile unit 10. For example, the second control device 51 outputs a target rotation speed command to the propulsion control devices 32. The target rotation speed command is a command for instructing a target rotation speed of the propulsion motors 31. Each propulsion control device 32 recognizes the rotation speed of the propulsion motor 31 by acquiring a detection result of the rotation speed sensor 33. Each propulsion control device 32 controls the propulsion motors 31 so that the target rotation speed instructed by the target rotation speed command agrees with the rotation speed of the propulsion motor 31. The second control device 51 may be configured to lift and lower the forks 22 by controlling the hydraulic mechanism 34.

The second control device 51 may perform a control to limit the moving speed of the mobile unit 10. For example, the second control device 51 sets a maximum speed for the moving speed of the mobile unit 10. The second control device 51 outputs a target rotation speed command to the propulsion control devices 32 so that the moving speed of the mobile unit 10 does not exceed the set maximum speed. This limits the moving speed of the mobile unit 10.

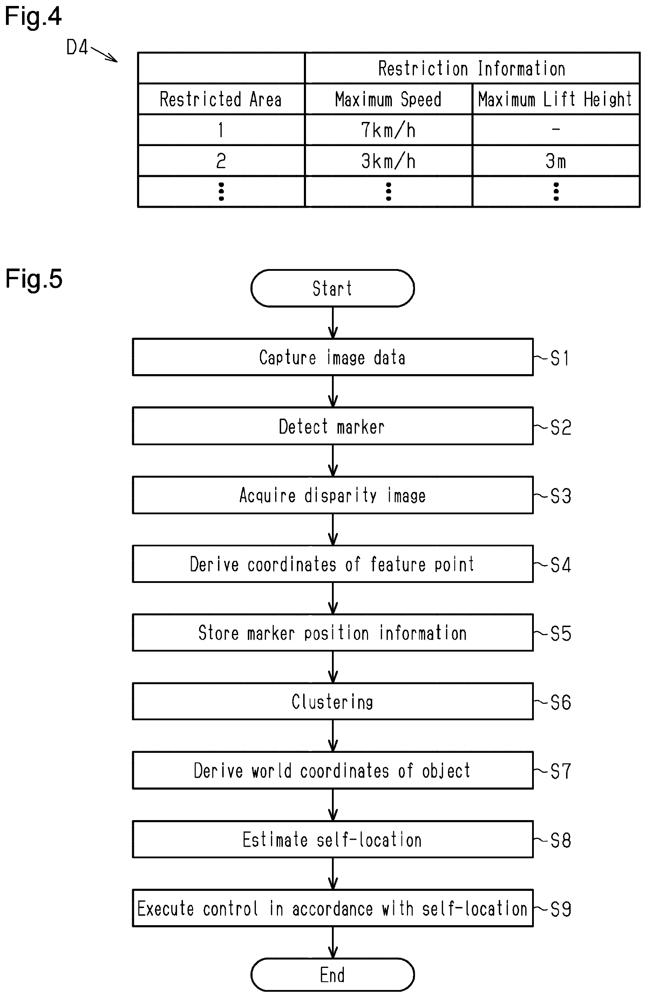

As shown in Fig. 4, the storage unit 53 may store restricted area information D4. The restricted area information D4 is related to restricted areas established in the movement environment A1. As shown in Fig. 1, the movement environment A1 includes at least one restricted area A11. In the present embodiment, multiple restricted areas A11 are established. The restricted areas A11 are defined by map coordinates. For example, when the restricted areas A11 each have a quadrangular shape, each restricted area A11 may be defined by map coordinates of the four corners of the restricted area A11.

The restricted areas A11 are areas in which a restriction is imposed on operation of the mobile unit 10. As an example, the maximum speed of the mobile unit 10 is set in the restricted areas A11. The set maximum speed may be different for each restricted area A11. For example, the movement environment A1 includes an area where a person needs to perform work and an area where the mobile unit 10 performs material handling work. In this case, the maximum speed may be set for each restricted area A11 such that the maximum speed is set lower in an area where a person needs to perform work than in an area where the mobile unit 10 performs material handling work.

The restricted areas A11 may be areas where the lift height is limited in addition to or instead of the limiting of the maximum speed of the mobile unit 10. In this case, the maximum lift height is set in the restricted areas A11. The second control device 51 performs a control such that the lift height does not exceed the maximum lift height while recognizing the lift height using the lift sensor 35.

Control Executed by Mobile Unit Control System

A control executed by the mobile unit control system 40 will now be described. The mobile unit control system 40 estimates its self-location using the markers M. Then, the mobile unit control system 40 performs a control in accordance with the self-location. The details will be illustrated below.

As shown in Fig. 5, in step S1, the first control device 45 acquires image data from the image capturing device 42. The image data includes a reference image and a comparison image. The reference image is captured by the first camera 43. The comparison image is captured by the second camera 44.

Next, in step S2, the first control device 45 detects a marker M from the image data. Detection of the marker M from the image data can be performed using an existing algorithm. For example, the first control device 45 detects a marker M using a known open-source software such as ARToolkit. The first control device 45 detects, for example, four corners of the marker M. Then, the first control device 45 reads the information associated with the marker M from the region surrounded by the four corners of the marker M. In the present embodiment, the first control device 45 detects the marker M from the reference image.

Next, in step S3, the first control device 45 acquires a disparity image. The disparity image is an image in which a disparity [px] is associated with pixels. The disparity is a difference between positions of the same feature point appearing in the reference image and the comparison image. The first control device 45 compares the reference image with the comparison image. The first control device 45 is capable of calculating the difference between the positions of the same feature point appearing in the reference image and the comparison image. The feature points are, for example, edges of an object. Feature points can be detected, for example, from luminance information. The difference between the positions of the same feature point can be represented by, for example, a pixel displacement. The pixel displacement indicates the number of pixels by which the positions of the same feature point in the reference image and the comparison image are displaced.

The calculation of the disparity will now be described. The first control device 45 performs a conversion from RGB to YCrCb for each of the reference image and the comparison image. The first control device 45 compares the degrees of similarity between each pixel of the reference image and each pixel of the comparison image. For each pixel of the reference image, the first control device 45 extracts the pixel of the comparison image that is most similar to the pixel of the reference image. Then, the first control device 45 calculates, as a disparity, the pixel displacement corresponding to the difference in position between the pixel of the reference image and the pixel of the comparison image that is most similar to that pixel of the reference image. The first control device 45 associates the disparity corresponding to each pixel of the reference image with the pixel. As a result, the first control device 45 acquires a disparity image. The reference image is thus an image having pixels with which disparities are associated. The comparison image is an image to be compared with the reference image in order to calculate the disparities.

Next, in step S4, the first control device 45 derives the coordinates of feature points in a world coordinate system. First, the first control device 45 derives the coordinates of feature points in a camera coordinate system from the baseline length of the image capturing device 42, the focal distance of the image capturing device 42, and the disparity image. The camera coordinate system is a coordinate system having the image capturing device 42 as the origin. The Z-axis of the camera coordinate system is, for example, an optical axis. The X-axis of the camera coordinate system is an axis orthogonal to the optical axis. The Y-axis of the camera coordinate system is an axis orthogonal to the optical axis and the X-axis.

The position of a feature point in the camera coordinate system can be represented by a Z coordinate Zc, an X coordinate Xc, and a Y coordinate Yc in the camera coordinate system. The Z coordinate Zc, the X coordinate Xc, and the Y coordinate Yc can be derived using the following Expressions (1) to (3), respectively.

$$Zc = \frac{B \times f}{d} \cdots (1)$$

$$Xc = (xp - x') \times \frac{Zc}{f} \cdots (2)$$

$$Yc = (yp - y') \times \frac{Zc}{f} \cdots (3)$$

In Expressions (1) to (3), the symbol B represents a baseline length [mm]. The symbol f represents a focal length [mm]. The symbol d represents a disparity [px]. The symbol xp represents any X coordinate in the disparity image. The symbol x' represents the X coordinate of the center point of the disparity image. The symbol yp represents an any Y coordinate in the disparity image. The symbol y' represents the Y coordinate of the center point of the disparity image.

The first control device 45 determines xp as the X coordinate of a feature point in the disparity image, determines yp as the Y coordinate of the feature point in the disparity image, and determines d as a disparity associated with the coordinates of the feature point, thereby deriving the coordinates of the feature point in the camera coordinate system.

The world coordinate system is a coordinate system in real space. The X-axis of the world coordinate system is an axis extending in a horizontal direction in a state in which the mobile unit 10 is positioned on a horizontal plane. Specifically, the X-axis extends in the width direction of the mobile unit 10. The Y-axis of the world coordinate system is an axis orthogonal to a horizontal direction; specifically to the X axis. The Z-axis of the world coordinate system is an axis orthogonal to the X-axis and the Y-axis of the world coordinate system. The origin of the world coordinate system, for example, is located at the position where the X and Y coordinates correspond to the location of the image capturing device 42, and the Z coordinate is at the level of the road surface. The origin of the world coordinate system represents the position of the mobile unit 10. The coordinates in the world coordinate system represent a relative position with respect to the mobile unit 10. The position of a feature point in the world coordinate system can be represented by an X coordinate Xw, a Y coordinate Yw, and a Z coordinate Zw in the world coordinate system.

The first control device 45 converts coordinates in the camera coordinate system into coordinates in the world coordinate system using the following Expression (4). The first control device 45 thus obtains the coordinates of the feature point in the world coordinate system.

$$\begin{pmatrix} Xw \\ Yw \\ Zw \end{pmatrix} = \begin{pmatrix} 1 & 0 & 0 \\ 0 & \cos\theta & -\sin\theta \\ 0 & \sin\theta & \cos\theta \end{pmatrix} \begin{pmatrix} Xc \\ Yc \\ Zc \end{pmatrix} + \begin{pmatrix} 0 \\ 0 \\ H \end{pmatrix} \cdots (4)$$

The symbol H in Expression (4) represents the installation height [mm] of the image capturing device 42 in the world coordinate system. The symbol θ represents an angle formed by adding 90° to the angle between the optical axis and the horizontal plane. Coordinates in the world coordinate system are referred to as world coordinates in some cases.

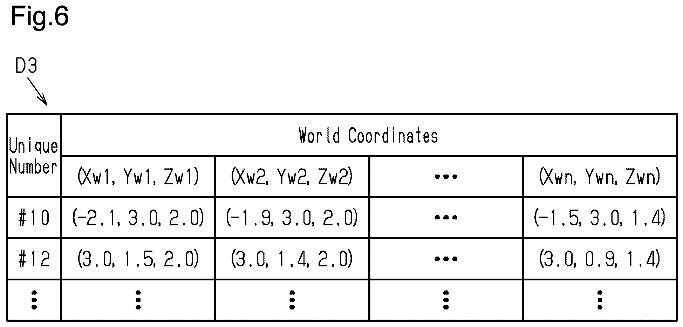

Next, as shown in Figs. 5 and 6, the first control device 45 stores marker position information D3 in the storage unit 47 in step S5. For example, the first control device 45 stores the marker position information D3 in the RAM, which temporarily holds information.

As shown in Fig. 6, the marker position information D3 is information in which the world coordinates of target sections of the markers M are associated with the unique numbers of the markers M. The target section of each marker M is a feature point generated by the marker M. The pixels of the disparity image correspond to the pixels of the reference image. Therefore, the feature point generated by the marker M correspond to pixels that represent the target section of the marker in the reference image. The world coordinates of the target section are the world coordinates of a part of the marker M.

In step S2, the four corners of the marker M in the reference image are detected. Since the disparity image is obtained by associating a disparity with the reference image, the first control device 45 can determine whether the coordinates (xp, yp) of the feature point are included in the range surrounded by the four corners of the marker M. The first control device 45 sets the world coordinates obtained from feature points included in the range surrounded by the four corners of the marker M as the world coordinates of the target section. Then, the first control device 45 associates the unique number read in step S2 with the world coordinates of the target section corresponding to the unique number. Multiple feature points are obtained from the marker M. Accordingly, the first control device 45 associates multiple sets of world coordinates of the target section with each of the unique numbers.

Next, in step S6, the first control device 45 performs extraction of an object by clustering the feature points, as shown in Fig. 5. The first control device 45 regards, as a single point cloud, a set of feature points presumed to represent the same object among feature points representing a portion of the object. Then, the first control device 45 extracts the single point cloud as one object. Clustering can be performed using various methods.

Next, in step S7, the first control device 45 derives the world coordinates of the object. The world coordinates of the object can be derived from the world coordinates of the feature points included in the point cloud. As an example, a case of deriving the world coordinates of a marker M will now be described.

The first control device 45 derives the world coordinates of a marker M from the world coordinates of the target section. The first control device 45 may derive the world coordinates of a marker M from the world coordinates of the four corners of the marker M. For example, the first control device 45 may set the world coordinates of the marker M to average values of the world coordinates of the four corners of the marker M. In this case, the world coordinates of the marker M correspond to the world coordinates of the center position of the four corners of the marker M. The first control device 45 may set the world coordinates of the marker M to average values of the world coordinates of all the target sections. In this case, the first control device 45 may derive the world coordinates of the marker M by using simple averages, or may derive the world coordinates of the marker M by using weighted averages in correspondence with to the position. The first control device 45 may derive the world coordinates of the marker M from the distribution of the world coordinates of the target section. The world coordinates of the marker M represent the relative position of the mobile unit 10 with respect to the marker M. The world coordinates of the marker M are an example of the positional relationship between the mobile unit 10 and the marker M based on the marker M.

Next, in step S8, the first control device 45 estimates the self-location of the mobile unit 10. The self-location is represented by the coordinates of the mobile unit 10 in the map coordinate system. The self-location is the position of the mobile unit 10 in the movement environment A1.

As an example, a case in which the first control device 45 detects a marker M1 as shown in Fig. 1 will be described. The first control device 45 reads the unique number from the marker M1. From the marker information D2 and the unique number of the marker M1, the first control device 45 obtains a distance d11 between the origin O and the marker M1 in the map coordinate system, that is, the coordinates of the marker M1 in the map coordinate system. The world coordinates represent a relative distance d12 between the marker M1 and the mobile unit 10. In this manner, the first control device 45 recognizes the positional relationship between the origin O of the map coordinate system and the marker M1, and also recognizes the positional relationship between the marker M1 and the mobile unit 10. This allows the first control device 45 to estimate the self-location of the mobile unit 10 using the coordinates of the marker M1 in the map coordinate system and the world coordinates of the marker M1. For example, the first control device 45 may estimate the self-location of the mobile unit 10 by adding the coordinates of the marker M1 in the map coordinate system and the world coordinates of the marker M1.

Next, in step S9, the second control device 51 executes a control of the mobile unit 10 in accordance with the self-location of the mobile unit 10 as shown in Fig. 5. When acquiring the self-location of the mobile unit 10 from the first control device 45, the second control device 51 determines whether the mobile unit 10 is located in a restricted areas A11. When the self-location is included in a restricted areas A11 defined by the restricted area information D4, the second control device 51 determines that the mobile unit 10 is located in the restricted area A11. When the mobile unit 10 is located in a restricted area A11, the second control device 51 performs a control in accordance with the restricted area A11. When the maximum speed is set in the restricted area A11, the second control device 51 controls the mobile unit 10 so as not to exceed the maximum speed set in the restricted area A11. In the example shown in Fig. 1, the second control device 51 determines that the mobile unit 10 is located in a restricted area A11. Then, the second control device 51 recognizes the maximum speed set for the restricted area A11 from the restricted area information D4. The second control device 51 controls the mobile unit 10 such that the moving speed of the mobile unit 10 does not exceed the maximum speed. When the limitation of the lift height is imposed on the restricted area A11, the second control device 51 recognizes the maximum lift height set for the restricted area A11 from the restricted area information D4. The second control device 51 controls the mobile unit 10 such that the lift height does not exceed the maximum lift height.

Advantages of Present Embodiment

(1) The first control device 45 detects a marker M from the image data captured by the image capturing device 42. The image capturing device 42 includes a stereo camera unit including two cameras. Therefore, based on the principle of triangulation, the positional relationship between the mobile unit 10 and marker M is accurately estimated.

(2) Each marker M defines map coordinates that correspond to the absolute position of the marker M in the movement environment A1. The first control device 45 recognizes the map coordinates of the marker M by reading the marker M. The first control device 45 estimates the self-location of the mobile unit 10 from the map coordinates of the marker M and the relative position of the mobile unit 10 with respect to the marker M. The estimated self-location of the mobile unit 10 corresponds to the absolute position of the mobile unit 10 in the movement environment A1. Thus, the second control device 51 performs a control in accordance with the self-location of the mobile unit 10. For example, as described in the embodiment, the second control device 51 may determine whether the mobile unit 10 is located in a restricted area A11 from the self-location of the mobile unit 10. The second control device 51 may generate a route for autonomous driving of the mobile unit 10 based on the self-location of the mobile unit 10.

(3) The first control device 45 derives the world coordinates of a marker M from the pixels that represent the target section of the marker M. This allows the positional relationship between the mobile unit 10 and the marker M to be accurately estimated.

(4) The first control device 45 detects a marker M from the reference image. The first control device 45 acquires a disparity image by associating a disparity with pixels of the reference image. Since the pixels of the reference image and the pixels of the disparity image correspond to each other, the first control device 45 recognizes the position of the marker M in the disparity image by detecting the marker M from the reference image.

Modifications

The above-described embodiment may be modified as follows. The above-described embodiment and the following modifications can be combined as long as the combined modifications remain technically consistent with each other.

The first control device 45 may detect a marker M from the comparison image. Since the positional relationship between the first camera 43 and the second camera 44 is constant, the pixel displacement between the comparison image and the reference image, in which the same portion as the comparison image appears, can be obtained in advance. The first control device 45 detects four corners of the marker M in the comparison image. The first control device 45 calculates the positions of the four corners of the marker M in the reference image from the four corners of the marker M in the comparison image. Accordingly, the first control device 45 can perform the processing after step S3 even when the marker M is detected from the comparison image.

When a marker M cannot be detected from the reference image, the first control device 45 may detect the marker M from the comparison image. In this case, even when the marker M cannot be detected from the reference image, detection of the marker M from the comparison image allows the information associated with the marker M to be read, and the world coordinates of the marker M to be derived.

The position of the mobile unit 10 in the movement environment A1 may be a relative position of the mobile unit 10 with respect to a marker M. In this case, information indicating a restricted area A11 may be associated with the marker M. For example, a range of the restricted area A11 with reference to the marker M may be associated with the marker M. The range of the restricted area A11 with reference to the marker M may be, for example, a circular range centered on the marker M. In this case, the second control device 51 determines whether the mobile unit 10 is located in the restricted area A11 from the positional relationship between the mobile unit 10 and the marker M and the information indicating the restricted area A11 read from the marker M. When the mobile unit 10 is located in the restricted area A11, the second control device 51 performs a control such that the moving speed of the mobile unit 10 does not exceed the maximum speed read from the marker M.

The positional relationship between the mobile unit 10 and a marker M based on the marker M may be a relative distance between the mobile unit 10 and the marker M and a relative angle of the mobile unit 10 with respect to the marker M.

The map coordinates of the marker M may be associated with the marker M. Specifically, the map coordinates of the marker M may be associated with the marker M as information that defines the absolute position of the marker M in the movement environment A1. As in the above-described embodiment, a unique number corresponding to the map coordinates of each marker M may be associated with the marker M as the information defining the absolute position of the marker M in the movement environment A1.

The second control device 51 may limit the moving speed of the mobile unit 10 when an object exists within a prescribed range from the mobile unit 10. Whether an object exists within the prescribed range can be determined from the world coordinates of the object. In this case, the prescribed range may be associated with each restricted area A11. The size of the prescribed range may be changed in accordance with each restricted area A11. The second control device 51 sets a prescribed range corresponding to the restricted area A11 in which the mobile unit 10 is located.

All of the processes of step S1 to step S9 may be executed by the first control device 45. All of the processes of step S1 to step S9 may be executed by the second control device 51. A part of the processes of step S1 to step S9 may be executed by the first control device 45, and the remainder may be executed by the second control device 51. In other words, the processes of steps S1 to S9 can be allocated to the first control device 45 and the second control device 51 in any way.

The control unit may be a single device.

The mobile unit 10 may include a communication device. In this case, the mobile unit 10 may be able to communicate with external devices using the communication device. At least one of the map data D1, the marker information D2, and the restricted area information D4 may be updatable by an external device. The expression "at least one" as used herein means "one or more" of desired options. As an example, the expression "at least one" as used herein means "only one option" or "both of two options" if the number of options is two. As another example, the expression "at least one" used herein means "only one option" or "a combination of any two or more options" if the number of options is three or more.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

**Claims**

1. A mobile unit control system (40), comprising:

   an image capturing device (42) attached to a mobile unit (10), the image capturing device (42) being configured to capture images of a marker (M) disposed in a movement environment of the mobile unit (10);
   a control unit (45, 51); and
   a storage unit (47), wherein
   the image capturing device (42) is a stereo camera unit,
   the marker (M) defines an absolute position of the marker (M) in the movement environment,
   the control unit (45, 51) is configured to

      acquire image data from the image capturing device (42),
      detect the marker (M) from the image data,
      acquire the absolute position from the marker (M),
      derive coordinates of the marker (M) in a world coordinate system from pixels representing a target section of the marker (M),
      acquire a relative position of the mobile unit (10) with respect to the marker (M) from the coordinates of the marker (M) in the world coordinate system,
      derive an absolute position of the mobile unit (10) in the movement environment from the absolute position of the marker (M) and the acquired relative position of the mobile unit (10), and
      execute a control based on the absolute position of the mobile unit (10),

   the storage unit (47) is configured to store map data representing the movement environment using coordinates in a map coordinate system, and
   the control unit (45, 51) is configured to acquire coordinates in the map coordinate system as the absolute positions of the marker (M) and the mobile unit (10).

2. The mobile unit control system (40) according to claim 1, wherein

   the stereo camera unit includes:

      a first camera (43); and
      a second camera (44),

   the image data includes:

a reference image obtained by the first camera (43); and
a comparison image obtained by the second camera (44), and

the control unit (45, 51) is configured to

detect the marker (M) from the reference image, and
associate a disparity with pixels of the reference image, the disparity being represented by a pixel displacement that indicates the number of pixels by which positions of the same feature point in the reference image and the comparison image are displaced.

3. The mobile unit control system (40) according to claim 2, wherein the control unit (45, 51) is configured to detect the marker (M) from the comparison image when the marker (M) cannot be detected from the reference image.

4. The mobile unit control system (40) according to claim 1, wherein the marker (M) is an augmented reality marker.


**Patentansprüche**

1. Steuerungssystem (40) für eine mobile Einheit, umfassend:

eine Bildaufnahmevorrichtung (42), die an einer mobilen Einheit (10) angebracht ist, wobei die Bildaufnahmevorrichtung (42) dazu ausgebildet ist, Bilder eines Markers (M), der in einer Bewegungsumgebung der mobilen Einheit (10) angeordnet ist, aufzunehmen;
eine Steuereinheit (45, 51); und
eine Speichereinheit (47), wobei die Bildaufnahmevorrichtung (42) eine Stereo-Kameraeinheit ist,
der Marker (M) eine absolute Position des Markers (M) in der Bewegungsumgebung definiert,
die Steuereinheit (45, 51) dazu ausgebildet ist, Bilddaten von der Bildaufnahmevorrichtung (42) zu erfassen, den Marker (M) aus den Bilddaten zu detektieren,
die absolute Position von dem Marker (M) zu erfassen, Koordinaten des Markers (M) in einem Weltkoordinatensystem aus Pixeln, die einen Zielabschnitt des Markers (M) darstellen, abzuleiten, eine relative Position der mobilen Einheit (10) in Bezug auf den Marker (M) aus den Koordinaten des Markers (M) im Weltkoordinatensystem zu erfassen,
eine absolute Position der mobilen Einheit (10) in der Bewegungsumgebung aus der absoluten Position des Markers (M) und der erfassten relativen Position der mobilen Einheit (10) abzuleiten, und
eine Steuerung, basierend auf der absoluten Position der mobilen Einheit (10), auszuführen,
die Speichereinheit (47) dazu ausgebildet ist, Kartendaten zu speichern, die die Bewegungsumgebung unter Verwendung von Koordinaten in einem Kartenkoordinatensystem darstellen, und
die Steuereinheit (45, 51) dazu ausgebildet ist, Koordinaten im Kartenkoordinatensystem als die absoluten Positionen des Markers (M) und der mobilen Einheit (10) zu erfassen.

2. Steuerungssystem (40) für eine mobile Einheit nach Anspruch 1, wobei die Stereo-Kameraeinheit Folgendes einschließt:

eine erste Kamera (43); und
eine zweite Kamera (44),
wobei die Bilddaten Folgendes einschließen:

ein Referenzbild, das von der ersten Kamera (43) erhalten wird; und
ein Vergleichsbild, das von der zweiten Kamera (44) erhalten wird, und
die Steuereinheit (45, 51) dazu ausgebildet ist, den Marker (M) aus dem Referenzbild zu detektieren, und eine Disparität mit Pixeln des Referenzbildes zuzuordnen, wobei die Disparität durch eine Pixelverschiebung dargestellt wird, die die Anzahl von Pixeln angibt, um die die Positionen desselben Merkmalspunktes in dem Referenzbild und dem Vergleichsbild verschoben sind.

3. Steuerungssystem (40) für eine mobile Einheit nach Anspruch 2, wobei die Steuereinheit (45, 51) dazu ausgebildet ist, den Marker (M) aus dem Vergleichsbild zu detektieren, wenn der Marker (M) aus dem Referenzbild nicht detektiert werden kann.

**4.** Steuerungssystem (40) für eine mobile Einheit nach Anspruch 1, wobei der Marker (M) ein Augmented-Reality-Marker ist.

**Revendications**

**1.** Système (40) de commande d'unité mobile, comprenant :

un dispositif (42) de capture d'image fixé à une unité mobile (10), le dispositif (42) de capture d'image étant configuré pour capturer des images d'un marqueur (M) disposé dans un environnement de mouvement de l'unité mobile (10) ;
une unité de commande (45, 51) ; et
une unité de stockage (47), dans lequel le dispositif (42) de capture d'image est une unité de caméra stéréo,
le marqueur (M) définit une position absolue du marqueur (M) dans l'environnement de mouvement,
l'unité de commande (45, 51) est configurée pour

acquérir des données d'image à partir du dispositif (42) de capture d'image,
détecter le marqueur (M) à partir des données d'image,
acquérir la position absolue à partir du marqueur (M),
dériver des coordonnées du marqueur (M) dans un système de coordonnées mondiales à partir de pixels représentant une section cible du marqueur (M),
acquérir une position relative de l'unité mobile (10) par rapport au marqueur (M) à partir des coordonnées du marqueur (M) dans le système de coordonnées mondiales,
dériver une position absolue de l'unité mobile (10) dans l'environnement de mouvement à partir de la position absolue du marqueur (M) et de la position relative acquise de l'unité mobile (10), et
exécuter une commande sur la base de la position absolue de l'unité mobile (10),

l'unité de stockage (47) est configurée pour stocker des données de carte représentant l'environnement de mouvement en utilisant des coordonnées dans un système de coordonnées de carte, et
l'unité de commande (45, 51) est configurée pour acquérir des coordonnées dans le système de coordonnées de carte en tant que les positions absolues du marqueur (M) et de l'unité mobile (10).

**2.** Système (40) de commande d'unité mobile selon la revendication 1, dans lequel

l'unité de caméra stéréo inclut :

une première caméra (43) ; et
une deuxième caméra (44),

les données d'image incluent :

une image de référence obtenue par la première caméra (43) ; et
une image de comparaison obtenue par la deuxième caméra (44), et l'unité de commande (45, 51) est configurée pour
détecter le marqueur (M) à partir de l'image de référence, et
associer une disparité à des pixels de l'image de référence, la disparité étant représentée par un déplacement de pixels qui indique le nombre de pixels par lequel des positions du même point caractéristique dans l'image de référence et l'image de comparaison sont déplacées.

**3.** Système (40) de commande d'unité mobile selon la revendication 2, dans lequel l'unité de commande (45, 51) est configurée pour détecter le marqueur (M) à partir de l'image de comparaison lorsque le marqueur (M) ne peut pas être détecté à partir de l'image de référence.

**4.** Système (40) de commande d'unité mobile selon la revendication 1, dans lequel le marqueur (M) est un marqueur de réalité augmentée.

Fig.1

Fig.2

Fig.3

## Fig.4

D4

| | Restriction Information | |
|---|---|---|
| Restricted Area | Maximum Speed | Maximum Lift Height |
| 1 | 7km/h | – |
| 2 | 3km/h | 3m |
| ⋮ | ⋮ | ⋮ |

## Fig.5

```
            ┌──────────┐
            │  Start   │
            └──────────┘
                 │
                 ▼
  ┌──────────────────────────────┐
  │     Capture image data       │─── S1
  └──────────────────────────────┘
                 │
                 ▼
  ┌──────────────────────────────┐
  │        Detect marker         │─── S2
  └──────────────────────────────┘
                 │
                 ▼
  ┌──────────────────────────────┐
  │    Acquire disparity image   │─── S3
  └──────────────────────────────┘
                 │
                 ▼
  ┌──────────────────────────────┐
  │ Derive coordinates of feature point │─── S4
  └──────────────────────────────┘
                 │
                 ▼
  ┌──────────────────────────────┐
  │  Store marker position information │─── S5
  └──────────────────────────────┘
                 │
                 ▼
  ┌──────────────────────────────┐
  │          Clustering          │─── S6
  └──────────────────────────────┘
                 │
                 ▼
  ┌──────────────────────────────┐
  │ Derive world coordinates of object │─── S7
  └──────────────────────────────┘
                 │
                 ▼
  ┌──────────────────────────────┐
  │     Estimate self-location   │─── S8
  └──────────────────────────────┘
                 │
                 ▼
  ┌──────────────────────────────────────┐
  │ Execute control in accordance with self-location │─── S9
  └──────────────────────────────────────┘
                 │
                 ▼
            ┌──────────┐
            │   End    │
            └──────────┘
```

Fig.6

D3

| Unique Number | World Coordinates | | | |
|---|---|---|---|---|
| | (Xw1, Yw1, Zw1) | (Xw2, Yw2, Zw2) | ••• | (Xwn, Ywn, Zwn) |
| #10 | (-2.1, 3.0, 2.0) | (-1.9, 3.0, 2.0) | ••• | (-1.5, 3.0, 1.4) |
| #12 | (3.0, 1.5, 2.0) | (3.0, 1.4, 2.0) | ••• | (3.0, 0.9, 1.4) |
| ⋮ | ⋮ | ⋮ | ⋮ | ⋮ |

**EP 4 443 262 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020080147 A
- US 20140267703 A1
- US 20180088586 A1
- JP 2022012369 A